# EUROPÄISCHE PATENTSCHRIFT

(11) **EP 3 266 604 B1**
(45) Veröffentlichungstag und Bekanntmachung des Hinweises auf die Patenterteilung: **14.04.2021**
(21) Anmeldenummer: 17178040.6
(22) Anmeldetag: 27.06.2017
(51) Int. Cl.: B32B 5/02, B32B 27/06, B32B 27/12, E04B 1/66, E06B 1/62

(54) **MEHRLAGIGE FOLIENBAHN ZUR VERWENDUNG IM BAUBEREICH**
MULTILAYER FILM PARTICULARLY FOR USE IN CONSTRUCTION
BANDE DE FILM MULTICOUCHE DESTINÉE AU DOMAINE DE LA CONSTRUCTION

(30) Priorität: 04.07.2016 DE 102016112206
(43) Veröffentlichungstag der Anmeldung: 10.01.2018
(73) Patentinhaber: Tremco CPG Germany GmbH, 92439 Bodenwöhr (DE)
(72) Erfinder: Deml, Beatrix, 92439 Bodenwöhr (DE); Komma, Markus, 93133 Burglengenfeld (DE)
(74) Vertreter: Bittner, Bernhard

(56) Entgegenhaltungen:
- EP-A1- 1 228 281
- DE-A1- 10 255 598
- US-A1- 2009 246 439

## Beschreibung

Die vorliegende Erfindung bezieht sich auf eine mehrlagige Folienbahn, insbesondere zur Verwendung im Baubereich. Im Baubereich ist es seit langer Zeit bekannt, dass unterschiedliche Dichtbänder verwendet werden, um beispielsweise eine Abdichtung zwischen einem Fenster und einer Fensterlaibung zu bewerkstelligen. Insbesondere sind dabei aus dem Stand der Technik auch mehrlagige dampfsperrende, dampfbremsende oder dampfdiffusionsoffene Folienbahnen bekannt. Derartige Folienbänder weisen üblicherweise mehrere Lagen unterschiedlichen Materials auf, die aneinander angeordnet sind.

Weiterhin sind bei einer Anschlussabdichtung von Fenstern hin zu tragenden Baukörpern vorgehängte Fassaden bekannt, bei denen auch die Fenster durch entsprechende Konstruktionen vor dem tragenden Baukörper angebracht sind. Dies ist beispielsweise bei größeren Objekten und Bürobauten und dergleichen der Fall. Daneben sind auch ein- bzw. zweischalige Fassaden sowie Wärmedämpfungsverbundsysteme mit sogenannten Lochfenstern bekannt, bei denen die Fenster im Bereich der tragenden Konstruktion mehr oder weniger innerhalb der Öffnung montiert werden. Dies ist beispielsweise im Wohnungsbau, bei kleineren Gebäuden der Industrie und Gemeinden der Fall.

Bei vorgehängten Fassaden ist es im Stand der Technik bekannt, um den Anschluss der Fenster zum Baukörper wasserdicht und luft- und winddicht zu erstellen, diesen Bereich mit Folien abzudichten. Die Folien bestehen in der Regel aus EPDM oder Butyl, TPO oder PVC. Die Folien werden dabei entweder am Fassadenelement und am Bandbaukörper verklebt oder aber mechanisch befestigt. Ein Nachteil dieser Folien besteht darin, dass sie nicht oder nur mit sehr hohem Aufwand überklebbar sind. Sie sind auch mit handelsüblichen Mörteln nicht überputzbar. Eine Möglichkeit für luft- und winddichte Abdichtung besteht im Einsatz von selbstklebenden Butylbändern, die auf der Oberfläche mit einem Vlies versehen sind. Derartige Butylbänder sind auf dem Baukörper selbstklebend und können in die Fensterkonstruktionen hineingeklebt oder mechanisch befestigt werden.

Nachteilig an dieser Vorgehensweise ist jedoch, dass die Dicke der Butylbänder oft gleich oder größer als 1 mm ist und dass sie bei Überdeckungen über Kopf bei Breiten > 150 mm in der Regel zusätzlich mechanisch befestigt werden müssen.

Weiterhin ist aus der EP 1 228 281 B1 eine Folienbahn bekannt, welche insbesondere auch für Fensterrahmen Anwendung findet. Diese Folienbahn weist einen wasser- und luftdichten Kunststoff als Mittellage auf sowie überputzbare Außenlagen, beispielsweise aus Vlies oder anderen Materialien. Diese diffusionssperrende Folienbahn hat sich in der Praxis zwar bewährt, andererseits weist diese Folie den Nachteil auf, dass sie zum Teil noch nicht hinreichend gute Putzhaftung aufweist.

Der vorliegenden Erfindung liegt daher die Aufgabe zugrunde, Folienbahnen zur Verfügung zu stellen, welche gegenüber dem Stand der Technik eine erhöhte Putzhaftung aufweisen. Diese Aufgaben werden erfindungsgemäß durch die Gegenstände der unabhängigen Patentansprüche erreicht. Vorteilhafte Ausführungsformen und Weiterbildungen sind Gegenstand der Unteransprüche.

Eine erfindungsgemäße mehrlagige Folienbahn, insbesondere zur Verwendung im Baubereich, weist eine flächenartige, folienartige und sich in einer ersten Erstreckungsrichtung erstreckende und aus einem Kunststoff bestehende erste Lage auf und eine an dieser folienartigen Trägerlage angeordnete flächige zweite Lage. Dabei weist dieser Verbund eine erste sich in der Erstreckungsrichtung erstreckende Oberfläche und eine zweite sich in der Erstreckungsrichtung erstreckende Oberfläche auf, wobei diese zweite Oberfläche der ersten Oberfläche gegenüberliegt.

Erfindungsgemäß ist an wenigstens einer dieser Oberflächen wenigstens abschnittsweise und flächig ein Partikelmaterial angebracht ist, wobei das Partikelmaterial eine Beflockung ist, wobei das Partikelmaterial mit einer Längsrichtung senkrecht zu der zu befleckenden Oberfläche ausgerichtet ist.

Im Gegensatz zu dem oben beschriebenen Stand der Technik sind also keine Mittellage und zwei dieser begrenzenden Lagen vorgesehen, sondern an einer der beiden Lagen ist ein Partikelmaterial angebracht. Dieses Partikelmaterial wird damit nicht als "geschlossene Lage" zur Verfügung gestellt, sondern auf eine Oberfläche werden die Partikel einzeln aufgebracht, so dass letztlich das Partikelmaterial jeweils nur an der jeweiligen Oberfläche angeordnet ist, jedoch kein haltender Verbund zwischen den einzelnen Partikeln bzw. unmittelbar zwischen den einzelnen Partikeln besteht und/oder entsteht. Unter einer mehrlagigen Folienbahn wird insbesondere auch eine zweilagige Folienbahn verstanden.

Es hat sich gezeigt, dass gerade durch dieses Partikelmaterial die Putzhaftung erheblich gegenüber dem Stand der Technik verbessert werden kann. Während beispielsweise Vlies- oder Kunststoffseiten eine Putzhaftung beim Außenputz in einem Bereich zwischen 5 und 6 N/cm² aufweisen, konnte durch das hier beschriebene Partikelmaterial eine Putzhaftung von nahezu 11 N/cm² erreicht werden. Auch im Innenputzbereich konnten die Haftstärken an Putz erheblich verbessert werden. Die Bestimmung der Putzhaftung erfolgt in Anlehnung an DIN EN 1015- Teil 12.

Bei einer weiteren vorteilhaften Ausführungsform ist das Partikelmaterial daher derart ausgebildet, dass eine Haftkraft für Außenputz erreicht wird, welche größer ist als 7 N/cm², bevorzugt größer als 8 N/cm², bevorzugt größer als 9 N/cm² und besonders bevorzugt größer als 10 N/cm².

Weiterhin sind bevorzugt die Partikel derart an der wenigstens einen Oberfläche angeordnet, dass sich für den Innenputz eine Haftstärke ergibt, die größer ist als 15 N/cm², bevorzugt größer als 17 N/cm², bevorzugt größer als 19 N/cm², bevorzugt größer als 21 N/cm² und besonders bevorzugt größer als 25 N/cm². Damit kann durch das erfindungsgemäße Band bei Beflockung nahezu eine Verdoppelung der üblichen Werte für die Putzhaftung erreicht werden.

Bei einer weiteren vorteilhaften Ausführungsform ist das Partikelmaterial wenigstens abschnittsweise und bevorzugt im Wesentlichen durchgängig an der wenigstens einen Oberfläche angeordnet. Es wäre jedoch auch möglich, dass das Partikelmaterial unterbrochen angeordnet ist, beispielsweise in einer Vielzahl von Streifen.

Weiterhin können durch das Partikelmaterial Schriftzüge auf der jeweiligen Oberfläche dargestellt sein, wie etwa Werbeschriftzüge.

Bei einer weiteren vorteilhaften Ausführungsform ist die Folienbahn damit zweilagig und setzt sich - wie oben erwähnt - aus der Kunststofffolie und einem weiteren flächigen Material und insbesondere einer weiteren Folie zusammen.

Bei einer weiteren vorteilhaften Ausführungsform ist die Folienbahn wenigstens einseitig und bevorzugt beidseitig überputzbar. Weiterhin handelt es sich bei einer bevorzugten Ausführungsform um eine sogenannte feuchtevariable Folie. Vorteilhaft liegt ein sd-Wert der Folie in einem Bereich von. Bevorzugt liegt bei hohen Luftfeuchten (100%/85%) der Sd - Wert unter 1m, bevorzugt unter 0,7m, und besonders bevorzugt unter 0,5m.

Bevorzugt liegt bei niedrigen Luftfeuchten (0%/50%) Sd - Wert über 10m, bevorzugt über 12m und besonders bevorzugt über 15m.

Ein Sd-Wer kleiner 0,5 m wird als diffusionsoffen angesehen, ein Sd-Wert über 15m als diffusionsdicht.

Bei einer weiteren vorteilhaften Ausführungsform handelt es sich bei der zweiten flächigen Lage um eine Vlieslage. Damit ist bevorzugt diese Vlieslage an der Kunststofffolie angeordnet.

Bei einer weiteren vorteilhaften Ausführungsform handelt es sich bei dem Partikelmaterial um eine Beflockung . Eine Beflockung der jeweiligen Oberfläche hat sich als vorteilhaft erwiesen.

Bei einer weiteren vorteilhaften Ausführungsform ist das Partikelmaterial an der ersten Lage angebracht, d.h. insbesondere an der Kunststofffolie. Vorteilhaft ist der Kunststoff aus einer Gruppe von Kunststoffen ausgewählt, welche Polyamid, Zellulose-Viskose und dergleichen enthält.

Bei einer weiteren vorteilhaften Ausführungsform ist an derjenigen Oberfläche, an welcher das Partikelmaterial angebracht ist, wenigstens teilweise eine Klebstoffschicht angeordnet und diese Klebstoffschicht hält das Partikelmaterial an dieser Oberfläche. So ist es möglich, dass zunächst die Klebstoffschicht an der entsprechenden Oberfläche angeordnet wird und erst anschließend an dieser Klebstoffschicht bzw. auf diese Klebstoffschicht das Partikelmaterial aufgetragen wird.

Vorteilhaft ist die Klebstoffschicht vor der Aufbringung des Partikelmaterials und insbesondere vor der Beflockung bereits teilweise getrocknet.

Bei einer weiteren vorteilhaften Ausführungsform ist die auf der Oberfläche angeordnete Klebstoffschicht wenigstens abschnittsweise unterbrochen. So es ist beispielsweise möglich, dass ein Klebstoffauftrag an der entsprechenden Oberfläche in einem Streifen- oder Rechtecksmuster erfolgt, wobei zwischen den unterschiedlichen Streifen bzw. Rechtecken freie Flächen sind. Es hat sich gezeigt, dass eine durchgehende Beschichtung mit Klebstoff bei Verklebung der Flockseite mit einer Fugenflanke zu Dichtigkeitsproblemen führen kann.

Bei einer bevorzugten Ausführungsform erstrecken sich diese Klebestreifen in der oben erwähnten Erstreckungsrichtung des Bandes, d.h. insbesondere auch in der Richtung, in der es aufgerollt ist. Bei einer weiteren vorteilhaften Ausführungsform erstrecken sich auch die (klebstoff)freien Flächen zwischen diesen Klebebeschichtungen in der besagten Erstreckungsrichtung.

Vorteilhaft sind die einzelnen Klebstoffstreifen zueinander in einem vorgegebenen Abstand beabstandet. Dieser Abstand ist bevorzugt größer als 0,5mm, bevorzugt größer als 1,0mm und besonders bevorzugt größer als 1,5mm. Weiterhin ist dieser Abstand bevorzugt kleiner als 5mm, besonders bevorzugt kleiner als 4mm, bevorzugt kleiner als 3mm und besonders bevorzugt kleiner als 2,5mm. Diese Breitenrichtungen erstrecken sich dabei bevorzugt senkrecht zu der oben genannten Erstreckungsrichtung.

Bei einer weiteren vorteilhaften Ausführungsform weisen die Streifen des Klebstoffauftrags eine Breite auf, welche größer ist als 2mm, bevorzugt größer als 3mm, besonders bevorzugt größer als 4mm und besonders bevorzugt größer als 4,5mm. Bei einer weiteren bevorzugten Ausführungsform weisen die Streifen des Klebstoffauftrags eine Breite auf, welche kleiner ist als 10mm, bevorzugt kleiner als 8mm, bevorzugt kleiner als 7mm, besonders bevorzugt kleiner als 6mm und besonders bevorzugt kleiner als 5,5mm. Bevorzugt stehen die Breiten der Klebstoffstreifen und die Breiten der Beabstandungen zwischen den einzelnen Klebstoffstreifen zueinander in einem Verhältnis, welches größer ist als 1,2: 1, bevorzugt größer als 1,5 : 1 , bevorzugt größer als 1,7 : 1, bevorzugt größer als 2,0 : 1, bevorzugt größer als 2,2 : 1 und besonders bevorzugt größer als 2,3 : 1.

Bevorzugt stehen die Breiten der Klebstoffstreifen und die Breiten der Beabstandungen der einzelnen Klebstoffstreifen zueinander in einem Verhältnis, welches kleiner ist als 5: 1, bevorzugt kleiner als 4 : 1 , bevorzugt kleiner als 3,5 : 1, bevorzugt kleiner als 3,0 : 1 und bevorzugt kleiner als 2,8 : 1.

Für die Herstellung wird besonders bevorzugt die Kunststofffolie mit einem Klebstoff beschichtet. Vorteilhaft handelt es sich bei diesem Klebstoff um einen Dispersionskleber. Besonders bevorzugt ist der Klebstoff aus einer Gruppe von Klebstoffen ausgewählt, welche Acrylate enthält. Bevorzugt ist auch der Vliesstoff aus einem Kunststoff hergestellt. Die so mit dem Klebstoff beschichtete Bahn kann einen Trockenkanal durchlaufen, in dem der Klebstoff fast durchgetrocknet wird. Bevorzugt wird erst anschließend ein Beflockungsvorgang durchgeführt. Dabei sind J Z die kurzen Stapelfasern in einem Feld und insbesondere einem elektrischen Feld so ausgerichtet werden, dass sie senkrecht auf die Bahn zufliegen und darauf stehen. Die Verankerung dieser Fasern in dem Klebstoff ist dabei so gut, dass die geforderte Putzhaftung problemlos erreicht wird. Auch kann umgekehrt der Putz die Fasern durchsetzen, so dass der Halt verbessert wird.

Bevorzugt weisen die Stapelfasern eine Länge auf, welche größer ist als 0,1 mm, bevorzugt größer als 0,2mm und besonders bevorzugt größer als 0,25mm. Bei einer weiteren bevorzugten Ausführungsform weisen die Stapelfasern eine Länge auf, welche geringer ist als 0,6mm, bevorzugt geringer als 0,5mm und besonders bevorzugt geringer als 0,4mm und besonders bevorzugt geringer als 0,35mm.

Bei einer weiteren bevorzugten Ausführungsform liegt eine Faserdicke der Stapelfasern über 0,4dtex, bevorzugt über 0,6dtex, bevorzugt über 0,7dtex, besonders bevorzugt über 0,8dtex und besonders bevorzugt über 0,85dtex. Bei einer weiteren bevorzugten Ausführungsform liegt eine Faserdicke unter 2dtex, bevorzugt unter 1,7dtex, bevorzugt unter 1,5dtex, besonders bevorzugt unter 1,3dtex und besonders bevorzugt unter 1,0dtex.

Bei einer weiteren vorteilhaften Ausführungsform weist das Folienelement bzw. die Folienbahn (einschließlich der Beflockung) eine Gesamtdicke auf, die größer als 0,3 mm; 0,4 mm, bevorzugt größer als 0,5 mm. Bei einer weiteren vorteilhaften Ausführungsform weist das Folienelement bzw. die Folienbahn (einschließlich der Beflockung) eine Gesamtdicke auf, die kleiner ist als 1,3 mm; 1,2 mm, bevorzugt kleiner als 1,0 mm, bevorzugt kleiner als 0,8mm und besonders bevorzugt kleiner als 0,7mm. Diese Gesamtdicken haben sich in umfangreichen Tests als besonders günstig in der Verarbeitung erwiesen.

Vorteilhaft ist - wie oben erwähnt - die Klebeschicht in rechteckigen Abschnitten auf der jeweiligen Oberfläche angebracht.

Bei einer weiteren vorteilhaften Ausführungsform besteht die erste Lage aus einem luftdichten Kunststoff.

Bei einer weiteren möglichen Ausführungsform ist an beiden besagten Oberflächen eine Partikelmenge und insbesondere eine Beflockung angeordnet.

Bei einer weiteren vorteilhaften Ausführungsform ist an wenigstens einer der beiden Oberflächen wenigstens abschnittsweise eine ggfs- streifenartige - Selbstklebebeschichtung angeordnet. Mittels dieser Selbstklebebeschichtung kann das Material an einem Objekt, etwa einer Fensterlaibung, befestigt werden. Bevorzugt handelt es sich bei dieser Oberfläche um eine Oberfläche der zweiten Lage, d.h. insbesondere der Vlieslage. Dabei ist es denkbar, dass an der besagten Oberfläche nur ein Selbstklebestreifen vorgesehen ist und insbesondere ein randseitiger Selbstklebestreifen. Für eine Verklebung mit einer Laibung kann bevorzugt ein weiterer Klebstoff verwendet werden, insbesondere ein aus einer Kartusche stammender Klebstoff. Es wäre auch möglich, einen Butylstreifen zur Fixierung an der Laibung zu verwenden.

Vorteilhaft handelt es sich hierbei um eine Selbstklebebeschichtung, die insbesondere eine Anordnung des Folienelementes an Kunststoff, Aluminium, Holz oder dergleichen ermöglicht. An den angegebenen 3 Rahmenmaterialien wird bevorzugt mit doppelseitigem Klebeband (SK) verklebt. Dabei kann diese Selbstklebebeschichtung nur abschnittsweise an der zweiten Lage angeordnet sein. So könnte diese Selbstklebebeschichtung beispielsweise in einem zentralen Bereich (bezogen auf die Erstreckungsrichtung) angeordnet sein und wenigstens einer der Ränder der Folienbahn und bevorzugt beide Ränder könnten ohne eine derartige Selbstklebebeschichtung ausgeführt sein. Bevorzugt wird jedoch eine randständige Verklebung verwendet. Auch wäre es möglich, dass gerade an den Rändern Klebestreifen vorgesehen sind. Die SK/das Butyl an den Rändern sind als Montagehilfe bevorzugt. Wie erwähnt, wird als zweite Lage bevorzugt ein Vlies verwendet. Daneben könnten jedoch auch Gewebe, technische Gewirke, Gestricke aus synthetischen und natürlichen Fasern und Glas sowie verstärktes Papier und Folien eingesetzt werden. Vorteilhaft handelt es sich bei dem Vlies um Polyestervlies und insbesondere ein Spinnvlies, wobei auch ein Polyesternadelvlies oder ein Polypropylen (Nadel- oder Spinnvlies) denkbar wäre.

Bei einer weiteren vorteilhaften Ausführungsform liegt das Flächengewicht der ersten folienartigen Trägerlage über 10 g/m² bevorzugt über 20 g/m² und bevorzugt über 25 g/m² und besonders bevorzugt über 30 g/m² . Bei einer weiteren vorteilhaften Ausführungsform liegt das Flächengewicht der ersten folienartigen Trägerlage unter 80 g/m² bevorzugt unter 70 g/m² und bevorzugt unter 60 g/m².

Zur Herstellung ist es möglich, dass eine Bahn aus Vlies gemeinsam mit der ersten folienartigen Trägerlage durch den Spalt zweier Walzen geführt wird und diese dort aneinandergepresst werden. Weiterhin kann es möglich sein, dass ein für die erste Lage zu verwendendes Granulatmaterial zur Verfügung gestellt wird und auf das besagte Vlies aufgebracht wird. Dabei kann ein derartiges Polymergranulat in einem Extruder unter Temperatur verflüssigt werden und die Schmelze anschließend in einem gekühlten Walzenspalt auf das Vlies aufgebracht werden. Anschließend kann auf den ersten Folienträger die Beflockung aufgebracht werden.

Bei einer weiteren vorteilhaften Ausführungsform ist die Folienbahn als Rolle aufgerollt bzw. als Bahnrolle konfektioniert. Dabei ist es möglich, dass zusätzlich eine weitere Lage, ein sogenannter Liner an einer Seite der Folienbahn anliegt, etwa an der Vliessseite. Es wäre jedoch auch möglich, dass aufgrund der Ausgestaltung der Partikelelemente auf einen derartigen Liner verzichtet wird und/oder die Folienbahn linerlos aufgerollt ist.

Durch die Erfindung kann weiterhin ein relativ dünnes Folienmaterial zur Verfügung gestellt werden, welches sehr leicht überputzt werden kann und dabei eine sehr hohe Putzhaftung aufweisen kann.

Die vorliegende Erfindung ist weiterhin auf ein Verfahren zur Herstellung einer Folienbahn und insbesondere einer oben beschriebenen Folienbahn gerichtet. Dabei wird ein Verbund aus einer flächigen folienartigen und sich in einer ersten Erstreckungsrichtung erstreckenden und aus einem Kunststoff bestehenden ersten Lage und einer an dieser folienartigen ersten Trägerlage angeordneten flächigen zweiten Lage zur Verfügung gestellt und an wenigstens einer Oberfläche dieses Verbundes ein Partikelmaterial angebracht. Bevorzugt wird an der besagten Oberfläche dieses Verbundes ein Klebstoff angebracht und darauf ein Partikelmaterial mit eine Beflockung angeordnet. Vorteilhaft wird zunächst eine Klebeschicht angeordnet. Weiterhin ist es möglich, dass die mit dem Klebstoffmaterial versehene Oberfläche durch eine Trocknungseinrichtung gefördert wird und dort wenigstens teilweise getrocknet wird und bevorzugt nahezu vollständig getrocknet wird. Auf diese nahezu vollständige Klebeschicht wird bevorzugt ein Partikelmaterial angebracht. Insbesondere handelt es sich hierbei um eine Beflockung.

Bei einem weiteren bevorzugten Verfahren wird das Klebstoffmaterial wenigstens zeitweise vor dem Anbringen an die Lage durchgetrocknet. Bei einem weiteren bevorzugten Verfahren wird die Folienoberfläche des Lagenverbundes mit dem Klebstoff beschichtet und mit dem Beflockungsmaterial versehen.

Vorteilhaft wird das zu beflockende Partikelmaterial in einem Feld und insbesondere einem elektrischen Feld vor der Anordnung an der Oberfläche ausgerichtet.

Bei einem weiteren bevorzugten Verfahren wird das Material in der besagten Erstreckungsrichtung transportiert, während die Beflockung an einer Oberseite angebracht wird. Vorteilhaft handelt es sich hier um eine in vertikaler Richtung nach oben weisende Oberfläche. Das Partikelmaterial wird mit einer Längsrichtung senkrecht zu der zu beflockenden Oberfläche ausgerichtet. Bei einer bevorzugten Ausführungsform weisen die Partikel eine längliche Gestalt auf, d.h. sie erstrecken sich insbesondere in einer Richtung deutlich mehr als in hiervon abweichenden Richtungen.

Die vorliegende Erfindung ist weiterhin auf eine Fensterabdichtung gerichtet, wobei ein ein Fenster tragendes Element an einem Abschnitt eines Mauerwerks angeordnet ist und zwischen dem das Fenster tragenden Element und dem Mauerwerk wenigstens ein Folienelement der oben beschriebenen Art angeordnet ist. Vorteilhaft ist wenigstens abschnittsweise zwischen dem Folienelement und dem Mauerwerk ein Schaumelement vorgesehen und insbesondere ein rückstellfähiges Schaumelement. Vorteilhaft liegt wenigstens ein Abschnitt des Folienelements bzw. der Folienbahn an wenigstens einem Abschnitt des Schaumelements an.

Bei einer weiteren vorteilhaften Ausführungsform weist die Fensterabdichtung wenigstens zwei Folienelemente der oben beschriebenen Art auf, wobei besonders bevorzugt diese beiden Folienelemente räumlich voneinander getrennt sind.

Weitere Vorteile und Ausführungsformen ergeben sich aus den beigefügten Zeichnungen:
Darin zeigen:
- Fig. 1a: eine schematische Darstellung einer erfindungsgemäßen Folienbahn;
- Fig. 1b: eine perspektivische Darstellung einer erfindungsgemäßen Folienbahn;
- Fig. 2a - 2c: drei Beispiele für eine Anwendung der erfindungsgemäßen Folienbahn.

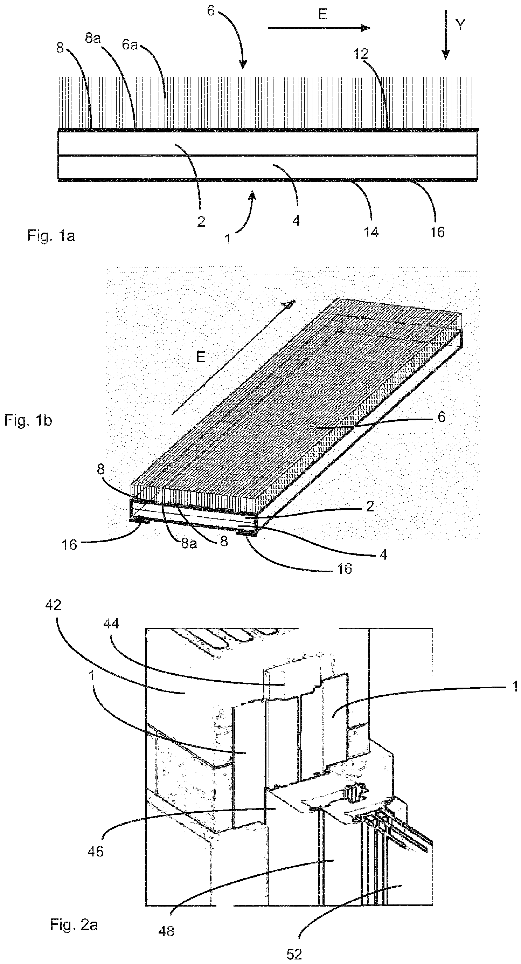

Figur 1a zeigt eine grob schematische Darstellung einer erfindungsgemäßen Folienbahn 1. Diese weist eine erste folienartige Trägerlage 2 auf. Diese folienartige Trägerlage 2 ist dabei -wie oben erwähnt - bevorzugt aus einem Kunststoff hergestellt. An dieser ersten folienartigen Trägerlage 2 ist eine zweite flächige Lage 4 angeordnet. Genauer gesagt sind die erste folienartige Lage 2 und die zweite Lage 4 aneinander befestigt, beispielsweise mittels eines klebenden Materials. Auch kann die Befestigung durch das Material der ersten Trägerfolie erfolgen, wie oben beschrieben.

Bei der zweiten flächigen Lage 4 handelt es sich um eine Vlieslage. Das Bezugszeichen 12 kennzeichnet eine erste Oberfläche, welche hier durch die erste Lage 2 definiert ist und das Bezugszeichen 14 kennzeichnet eine zweite Oberfläche, welche durch die zweite Lage 4 definiert ist.

An der ersten Lage 2 ist eine Vielzahl von Klebeflächen 8 angeordnet. Man erkennt, dass diese Klebeflächen hier streifenartig angeordnet sind bzw. rechteckförmig. Das Bezugszeichen E kennzeichnet die Erstreckungsrichtung. des Bandes. Im Rahmen der Herstellung kann es sich bei der Richtung E auch um eine zu der Transportrichtung des Bandes senkrechte Richtung handeln. Die einzelnen Klebestreifen 8 sind jeweils durch vergleichsweise dünne Abschnitte voneinander getrennt. An den Klebestreifen ist ein Partikelmaterial 6 angeordnet, welches hier eine Vielzahl von einzelnen Partikeln 6a aufweist. Diese Partikel sind hier in einer Richtung Y orientiert, welche senkrecht zu der Erstreckungsrichtung E ist und auch senkrecht zu der ersten bzw. zweiten Oberfläche 12 und 14. Auf diese Weise wird ein sehr großer Halt der einzelnen Partikel an der Oberfläche 12 ermöglicht. Es handelt sich hierbei um eine Beflockung, wie oben erwähnt. Durch diese Beflockung wird eine sehr hohe Putzhaftbarkeit ermöglicht, was sich insbesondere auch durch die vergleichsweise große Länge der einzelnen Beflockungselemente bzw. Beflockungspartikel 6a ergibt. Das Bezugszeichen 16 kennzeichnet eine Selbstklebebeschichtung, die sich hier in der Erstreckungsrichtung E erstreckt.

Fig. 1b zeigt eine perspektivische Darstellung der erfindungsgemäßen Folienbahn. Auch hier sind wieder die beiden Lagen 2 und 4 erkennbar sowie die an der Kunststofflage angebrachte Beflockung 6. Auch sind in dieser Darstellung sowohl die Klebestreifen 8 als auch die dazwischen liegenden klebstofffreien Abschnitte 8a erkennbar. Man erkennt, dass sich sowohl die Klebstoffstreifen 8 als auch die klebstofffreien Abschnitte jeweils parallel zu der Erstreckungsrichtung E erstrecken. Auch sind in Fig. 1b wieder ist in Fig. 1b wieder die Selbstklebeschicht 16, hier in Form von zwei randseitigen Selbstklebestreifen vorgesehen. Diese beiden randseitigen Streifen könnten beispielsweise jeweils eine Breite von 15mm aufweisen.

Die Figuren 2a - 2c zeigen drei mögliche Anordnungen eines erfindungsgemäßen Folienverbundes. Bei der in Figur 2a gezeigten Anordnung ist ein seitlicher Anschluss einer Fensterlaibung dargestellt. Das Bezugszeichen 42 kennzeichnet dabei einen Maueruntergrund, an dem ein Element, wie ein Fensterschaum 44 angebracht sein kann. Das Bezugszeichen 1 kennzeichnet zwei folienartige Bahnen, welche sowohl an dem Mauerwerk 42 als auch an dem Fensterschaum 44 angeordnet sind. Dieser Folienverbund 1 bewirkt-wie oben erwähnt - die Abdichtung zwischen Fenster und Laibung. Das Bezugszeichen 46 kennzeichnet ein erstes Fensterelement, welches an dem Folienverbund 1 anliegt. Das Bezugszeichen 48 kennzeichnet ein zweites Fensterelement, welches wiederum von dem ersten Fensterelement 46 gehalten wird. Das Bezugszeichen 52 kennzeichnet die einzelnen Fensterscheiben.

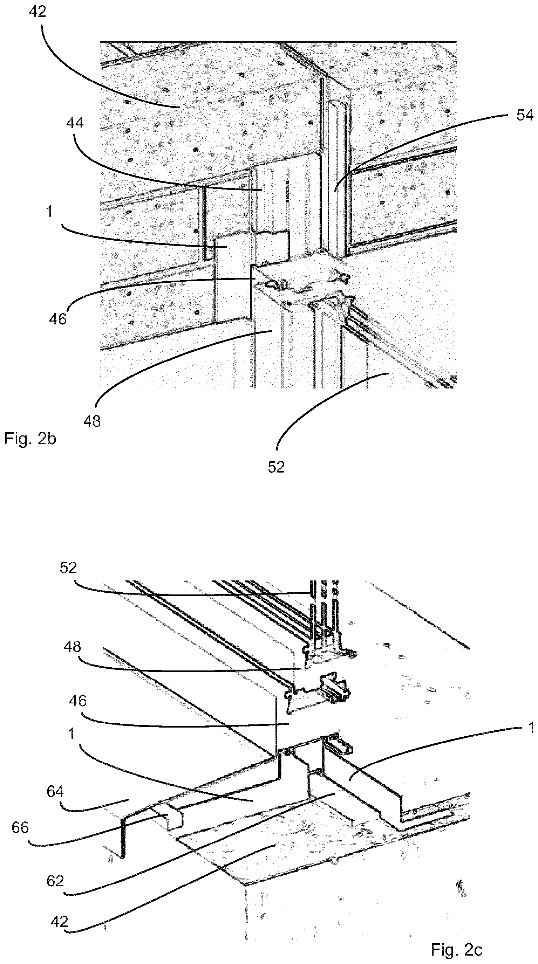

Figur 2b zeigt eine weitere Ausführungsform, welche hier insbesondere die Anordnung eines Fensters seitlich mit Anschlag kennzeichnet. Auch hier ist wieder an dem Mauerwerk 42 ein Fensterschaum 44 angeordnet und einseitig an diesem Fensterschaum 44 eine erfindungsgemäße Folienbahn 1. Die Bezugszeichen 46, 48 und 52 kennzeichnen auch hier wieder die Anlage des eigentlichen Fensters. Zusätzlich ist hier noch ein Abdichtband 54 vorgesehen, gegen welches sich das Fensterelement 46 abstützt. Daneben sind bevorzugt noch (nicht gezeigte) Klebestreifen vorgesehen, welche den Folienverbund an der Laibung und an dem Rahmen fixieren. Bei den Klebestreifen, welche den Folienverbund an der Laibung fixieren handelt es sich bevorzugt um Butyl - Klebestreifen, bei dem Klebestreifen, welche den Folienverbund an dem Rahmen befestigen um einen Selbstklebestreifen.

Bevorzugt ist jedoch der Folienverbund nicht vollflächig mit einem doppelseitigen Klebeband als Montagehilfe ausgestattet.

Figur 2c zeigt eine Einbaulage eines unteren Anschlusses eines Fensters. Dabei beziehen sich auch hier wieder die Bezugszeichen 46, 48 und 52 auf die einzelnen Fensterelemente, wobei hier noch ein Fensterbrettelement 64 vorgesehen ist. Das Bezugszeichen 1 kennzeichnet hier auch wieder zwei voneinander getrennte Abschnitte einer erfindungsgemäßen Folienbahn. Das Bezugszeichen 62 kennzeichnet wiederum einen Fensterschaum, der an einem Wand- bzw. Mauerwerk 42 angeordnet ist. Weiterhin ist noch ein Dichtelement 66 vorgesehen, welches das Fensterbrett 64 gegenüber der erfindungsgemäßen Folienbahn abdeckt bzw. abstützt.

Die Anmelderin behält sich vor sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichenliste

- 1: Folienbahn
- 2: erste Trägerlage
- 4: zweite Lage
- 6: Partikelmaterial
- 6a: Partikel
- 8: Klebstoffauftrag
- 8a: Zwischenraum
- 12: erste Oberfläche
- 14: zweite Oberfläche
- 16: (Selbst)klebeschicht
- 42: Maueruntergrund
- 44: Fensterschaum
- 46: erstes Fensterelement
- 48: zweites Fensterelement
- 52: Fensterscheibe
- 62: Fensterschaum
- 64: Fensterbrettelement
- 66: Dichtelement
- E: Erstreckungsrichtung
- Y: Richtung

## Patentansprüche

1. Mehrlagige Folienbahn (1), insbesondere zur Verwendung im Baubereich mit einer flächigen folienartigen sich in einer ersten Erstreckungsrichtung (E) erstreckenden und aus einem Kunststoff bestehenden ersten Lage (2) und mit einer an dieser folienartigen Trägerlage (2) angeordneten flächigen zweiten Lage (4), wobei dieser Verbund eine erste sich in der Erstreckungsrichtung (E) erstreckende Oberfläche (12) und eine zweite sich in der Erstreckungsrichtung (E) erstreckende Oberfläche (14) aufweist und diese zweite Oberfläche (14) der ersten Oberfläche (12) gegenüberliegt,
**dadurch gekennzeichnet, dass**
an wenigstens einer dieser Oberflächen wenigstens abschnittsweise und flächig ein Partikelmaterial (6) angebracht ist, wobei das Partikelmaterial (6) eine Beflockung (6) ist, wobei das Partikelmaterial mit einer Längsrichtung senkrecht zu der zu beflockenden Oberfläche ausgerichtet ist.

2. Mehrlagige Folienbahn nach Anspruch 1,
**dadurch gekennzeichnet, dass**
die zweite flächige Lage (4) eine Vlies-Lage (4) ist.

3. Mehrlagige Folienbahn nach wenigstens einem der vorangegangenen Ansprüche,
**dadurch gekennzeichnet, dass**
die Beflockung (6) an der ersten Trägerlage (2) angebracht ist.

4. Mehrlagige Folienbahn nach wenigstens einem der vorangegangenen Ansprüche,
**dadurch gekennzeichnet, dass**
an derjenigen Oberfläche (12) an welcher das Partikelmaterial (6) angebracht ist, wenigstens teilweise eine Klebstoffschicht angeordnet ist und diese Klebstoffschicht das Partikelmaterial (6) an dieser Oberfläche (12) hält.

5. Mehrlagige Folienbahn nach Anspruch 4,
**dadurch gekennzeichnet, dass**
die auf der Oberfläche angeordnete Klebstoffschicht wenigstens abschnittsweise unterbrochen ist.

6. Mehrlagige Folienbahn nach wenigstens einem der vorangegangenen Ansprüche,
**dadurch gekennzeichnet, dass**
die erste Lage (2) aus einem luftdichten Kunststoff besteht.

7. Mehrlagige Folienbahn nach wenigstens einem der vorangegangenen Ansprüche,
**dadurch gekennzeichnet, dass**
an wenigstens einer der beiden Oberflächen (14) wenigstens abschnittsweise eine Selbstklebebeschichtung (16) angeordnet ist.

8. Mehrlagige Folienbahn nach wenigstens einem der vorangegangenen Ansprüche,
**dadurch gekennzeichnet, dass**
die Folienbahn eine Dicke aufweist, welche größer ist 0,20mm, bevorzugt größer als 0,30mm, bevorzugt größer als 0,40mm, bevorzugt größer als 0,50mm und/oder die Folienbahn eine Dicke aufweist, die kleiner ist als 1,30mm, bevorzugt kleiner als 1,20mm, bevorzugt kleiner als 1,10mm und besonders bevorzugt kleiner als 1,00mm.

9. Verfahren zur Herstellung einer Folienbahn und insbesondere einer Folienbahn nach wenigstens einem der vorangegangenen Ansprüche, wobei ein Verbund aus einer flächigen folienartigen sich in einer ersten Erstreckungsrichtung (E) erstreckenden und aus einem Kunststoff bestehenden ersten Lage (2) und einer an dieser folienartigen Trägerlage (2) angeordneten flächigen zweiten Lage (4), zur Verfügung gestellt wird und an wenigstens einer Oberfläche und bevorzugt an genau einer Oberfläche dieses Verbunds ein Partikelmaterial (6) angebracht wird, wobei das Partikelmaterial (6) eine Beflockung (6) ist, wobei das Partikelmaterial mit einer Längsrichtung senkrecht zu der zu beflockenden Oberfläche ausgerichtet wird.

## Claims

1. Multilayer foil sheet (1), in particular for the usage in the construction industry having a laminar foil-like first layer (2) which extends in a first extending direction (E) and is made from a plastic and having a laminar second layer (4) which is arranged on this foil-like support layer (2), wherein this compound has a first surface (12) which extends in the extending direction (E) and a second surface (14) which extends in the extending direction (E) and this second surface (14) lies opposite to the first surface (12),
**characterized in that**
a particle material (6) is applied to at least one of these surfaces at least in sections and laminarly, wherein the particle material (6) is a flocking (6), wherein the particle material is perpendicularly aligned with a longitudinal direction to the surface to be flocked.

2. Multilayer foil sheet according to claim 1,
**characterized in that**
the second laminar layer (4) is a nonwoven layer (4).

3. Multilayer foil sheet according to at least one of the preceding claims,
**characterized in that**
the flocking (6) is applied on the first support layer (2).

4. Multilayer foil sheet according to at least one of the preceding claims,
**characterized in that**
at least partially an adhesive layer is arranged on that surface (12) on which the particle material (6) is applied and this adhesive layer adheres the particle material (6) to this surface (12).

5. Multilayer foil sheet according to claim 4,
**characterized in that**
the adhesive layer which is arranged on the surface is at least in sections interrupted.

6. Multilayer foil sheet according to at least one of the preceding claims,
**characterized in that**
the first layer (2) is made from an air-tight plastic.

7. Multilayer foil sheet according to at least one of the preceding claims,
**characterized in that**
a self-adhesive layer (16) is arranged at least in sections on at least one of the two surfaces (14).

8. Multilayer foil sheet according to at least one of the preceding claims,
**characterized in that**
the foil sheet has a thickness which is greater than 0.20 mm, preferably greater than 0.30 mm, preferably greater than 0.40 mm, preferably greater than 0.50 mm and/or the foil sheet has a thickness which is smaller than 1.30 mm, preferably smaller than 1.20 mm, preferably smaller than 1.10 mm and particularly preferably smaller than 1.00 mm.

9. Method for the production of a foil sheet and in particular a foil sheet according to at least one of the preceding claims, wherein a compound consisting of a laminar foil-like first layer (2) which extends in a first extending direction (E) and which is made from a plastic and a laminar second layer (4) which is arranged on this foil-like support layer (2) is provided and a particle material (6) is arranged on at least one surface and preferably on exactly one surface of this compound, wherein the particle material (6) is a flocking (6), wherein the particle material is perpendicularly aligned with a longitudinal direction to the surface to be flocked.

## Revendications

1. Bande de film multicouche (1), en particulier pour une utilisation dans le secteur de la construction avec une première couche plane (2) en forme de film s'étendant dans une première direction d'extension (E) et étant constituée de plastique et avec une deuxième couche plane (4) disposée sur cette couche de support (2) en forme de film, ce composite ayant une première surface (12) s'étendant dans la direction d'extension (E) et une seconde surface (14) s'étendant dans la direction d'extension (E) et la seconde surface (14) étant opposée à la première surface (12),
**caractérisée en ce que**
un matériau particulaire (6) est appliqué à au moins une de ces surfaces au moins en sections et de manière plane, le matériau particulaire (6) étant un flocage (6), le matériau particulaire étant aligné avec une direction longitudinale perpendiculaire à la surface à floquer.

2. Bande de film multicouche selon la revendication 1,
**caractérisée en ce que**
la deuxième couche plane (4) est une couche de non-tissé (4).

3. Bande de film multicouche selon au moins l'une des revendications précédentes,
**caractérisée en ce que**
le flocage (6) est fixé à la première couche de support (2).

4. Bande de film multicouche selon au moins l'une des revendications précédentes,
**caractérisée en ce que**
une couche adhésive est au moins partiellement disposée sur cette surface (12) à laquelle le matériau particulaire (6) est fixé et cette couche adhésive maintient le matériau particulaire (6) sur cette surface (12).

5. Bande de film multicouche selon la revendication 4,
**caractérisée en ce que**
la couche adhésive disposée sur la surface est interrompue au moins par tronçons.

6. Bande de film multicouche selon au moins l'une des revendications précédentes,
**caractérisée en ce que**
la première couche (2) est constituée d'un plastique étanche à l'air.

7. Bande de film multicouche selon au moins l'une des revendications précédentes,
**caractérisée en ce que**
un revêtement auto-adhésif (16) est disposé au moins en sections sur au moins l'une des deux surfaces (14).

8. Bande de film multicouche selon au moins l'une des revendications précédentes,
**caractérisée en ce que**
la bande de film a une épaisseur supérieure à 0,20 mm, de préférence supérieure à 0,30 mm, de préférence supérieure à 0,40 mm, de préférence supérieure à 0,50 mm et/ou la bande de film a une épaisseur inférieure à 1,30 mm, de préférence inférieure à 1,20 mm, de préférence inférieure à 1,10 mm et de manière particulièrement préférée inférieure à 1,00 mm.

9. Procédé de production d'une bande de film et en particulier d'une bande de film selon au moins l'une des revendications précédentes, un composite d'une première couche plane (2) en forme de film s'étendant dans une première direction d'étendue (E) et constituée d'un plastique et d'une seconde couche plane (4) disposée sur cette couche de support (2) en forme de film étant mis à disposition et un matériau particulaire (6) étant fixé à au moins une surface et de préférence à exactement une surface de ce composite, le matériau particulaire (6) étant un flocage (6), le matériau particulaire étant aligné avec une direction longitudinale perpendiculaire à la surface à floquer.
